Europäisches Patentamt

European Patent Office

Office européen des brevets

(19)

(11) Veröffentlichungsnummer: **0 072 890**
**A2**

(12) ## EUROPÄISCHE PATENTANMELDUNG

(21) Anmeldenummer: 82103795.9

(22) Anmeldetag: 04.05.82

(51) Int. Cl.³: **F 16 H 19/00**

(30) Priorität: 20.08.81 DE 3132854

(43) Veröffentlichungstag der Anmeldung:
02.03.83 Patentblatt 83/9

(84) Benannte Vertragsstaaten:
BE CH DE FR GB IT LI NL

(71) Anmelder: Neumünstersche Maschinen- und
Apparatebau Gesellschaft mbH. (NEUMAG)
Postfach 2240 Christianstrasse 160-164
D-2350 Neumünster 1(DE)

(72) Erfinder: Blöcker, Franz
Kolbergerstrasse 10
D-2350 Neumünster(DE)

(74) Vertreter: Planker, Karl-Josef, Dipl.-Phys.
c/o BABCOCK-BSH AKTIENGESELLSCHAFT Postfach 4
+ 6
D-4150 Krefeld 11(DE)

(54) Wälzringgetriebe und Changiereinrichtung.

(57) Ein auf einer angetriebenen Welle (2) sitzender Wälzring (7) wird durch eine parallelachsige zweite Welle (3), die gegen seine Außenfläche drückt, mit seiner Innenfläche an die erste Welle (2) angepreßt. Durch konische Laufflächen (9, 10) an der Innen- und Außenfläche wird bewirkt, daß der Wälzring (7) sich selbsttätig in eine von zwei stabilen Gleichgewichtsstellungen einstellt, bei denen seine Achse spitzwinklig zur Achse der Welle (2) steht. Je nachdem, welche der beiden Gleichgewichtsstellungen er einnimmt, bewegt er sich in der einen oder anderen Richtung längs der Wellenachse. Durch Anschläge (12, 13) wird bewirkt, daß der Wälzring (7) von der einen in die andere Stellung umklappt und dadurch seine Bewegungsrichtung umkehrt. Bei einer Changiereinrichtung für Spulmaschinen dient der Wälzring (7) direkt als Changierfadenführer. Zu diesem Zweck ist seine Außenfläche mit einer U-förmigen Nut (14) für den Faden (18) versehen.

Fig. 1

EP 0 072 890 A2

Croydon Printing Company Ltd

Krefeld, den 17. März 1982
T1-PL/wey  -  F 81/05 EU

Neumünstersche Maschinen- und
Apparatebau Gesellschaft mbH (NEUMAG)
Christianstraße 160-164

2350 Neumünster

## Wälzringgetriebe und Changiereinrichtung

Die Erfindung betrifft ein Wälzringgetriebe zur Umwandlung
einer Drehbewegung in eine hin- und hergehende Bewegung.
Ferner betrifft die Erfindung eine Changiereinrichtung für
Spulmaschinen, die mit einem Wälzringgetriebe ausgerüstet
ist.

Durch die DE-PS 10 57 411 ist ein Wälzringgetriebe bekannt,
bei dem mindestens ein Ringkörper, dessen Innenfläche ballig
ausgebildet ist, mit dieser Innenfläche in kraftschlüssigem
Eingriff mit der Außenfläche einer Welle steht. Bei Schrägstellung der Ringachse wälzt sich der Ring schräg auf der
Oberfläche der rotierenden Welle ab und führt infolgedessen
eine Translationsbewegung in Richtung der Wellenachse aus.
Die Schrägstellung wird dadurch festgelegt, daß der rotierende Ring mit Kugellagern in einem schräggestellten, nicht
rotierenden Ring gelagert ist. Durch zusätzliche Mittel, z.B.
durch einen Hebel mit einem Übertotpunkt-Sprungwerk, kann an
zwei Anschlägen eine Bewegungsumkehr bewirkt werden, so daß
eine hin- und hergehende Bewegung entsteht.

In der selben Druckschrift sowie auch in der DE-OS 26 53 009 ist auch ein anderes Getriebe beschrieben, bei dem mindestens eine Rolle mit ihrer Außenfläche in kraftschlüssigem Eingriff mit der Oberfläche einer Welle steht. Bei Schrägstellung der Rollenachse wälzt sich die Rolle schräg auf der Oberfläche der rotierenden Welle ab und führt infolgedessen eine Translationsbewegung in Richtung der Wellenachse aus. Die Schrägstellung wird dadurch festgelegt, daß die Rolle in einer schräggestellten Gabel gelagert ist. Hierbei ist es grundsätzlich in ähnlicher Weise wie bei dem zuerst beschriebenen Getriebe möglich, durch zusätzliche Mittel eine hin- und hergehende Bewegung zu erzeugen.

Die beiden beschriebenen Getriebe sind ziemlich kompliziert. Zunächst bedarf der Wälzkörper - sei es ein Ring oder sei es eine Rolle - einer Lagerung, die ihn in einer bestimmten Winkelstellung festhält. Wenn man eine hin- und hergehende Bewegung erzeugen will, sind außerdem für die Lagerung zusätzliche Verstellmittel erforderlich, die an den Umkehrpunkten ein Umklappen der Lagerung und damit eine Bewegungsumkehr bewirken.

Außerdem ist es bei den bekannten Getrieben schwierig, den erforderlichen Anpreßdruck zwischen Wälzkörper und Welle zu erzeugen und eine sichere Führung zu gewährleisten. Um dies zu erreichen, werden in der Praxis meistens mehrere Wälzkörper - Ringe oder Rollen - in einem gemeinsamen Gestell angeordnet. Dadurch werden diese Getriebe noch wesentlich komplizierter.

Außerdem ist aus den geschilderten Gründen die hin- und herbewegte Masse ziemlich groß. Daher eignen sich diese Getriebe in erster Linie für relativ geringe Hubzahlen. Ihr Einsatz als Changiereinrichtungen bei Spulmaschinen stößt aber bei den heute geforderten hohen Geschwindigkeiten auf zunehmende

**0072890**

Schwierigkeiten, weil die Trägheitskräfte an den Umkehrpunkten bei diesen Geschwindigkeiten nicht mehr zu beherrschen sind.

Der Erfinder hat sich die Aufgabe gestellt, ein Wälzringgetriebe mit besonders einfachem Aufbau und sehr kleiner mitgeführter Masse zu schaffen. Darüber hinaus hat sich der Erfinder die spezielle Aufgabe gestellt, unter Verwendung eines solchen Wälzringgetriebes eine Changiereinrichtung für Spulmaschinen zu schaffen.

Der erste Teil der Aufgabe wird durch die in Anspruch 1 angegebene Merkmalkombination gelöst. Der Vorteil des erfindungsgemäßen Getriebes besteht darin, daß das hin- und herbewegliche Teil nur aus einem einzigen Ring besteht, der weder einer Lagerung noch eines zusätzlichen Verstellmittels zur Bewirkung der Bewegungsumkehr bedarf.

Der zweite Teil der Aufgabe wird durch das in Anspruch 2 angegebene Merkmal gelöst.

Durch das Merkmal des Anspruchs 3 wird das selbsttätige Einfangen eines Fadens ermöglicht.

Die Zeichnung dient zur Erläuterung der Erfindung anhand eines schematisch dargestellten Ausführungsbeispiels.

Fig. 1 zeigt den grundsätzlichen Aufbau des Getriebes in Ansicht;

Fig. 2 zeigt eine Changiereinrichtung mit dem Getriebe im Schnitt;

Fig. 3 zeigt in größerem Maßstab einen als Changierfadenführer ausgebildeten Ring im Schnitt.

In den Seitenteilen 1 eines Maschinengestells sind die beiden glatten Wellen 2, 3 parallelachsig mit kurzem Abstand gelagert. Die Welle 2 ist mit einem verlängerten Zapfen 4 versehen, der mit einem nicht dargestellten Antrieb verbunden ist. Die Lager der Welle 3 sind relativ zu den Lagern der Welle 2 rechtwinklig zu den Wellenachsen verschieblich. Sie werden durch mittels Schrauben 5 einstellbare Druckfedern 6 in der dargestellten Ruhelage festgehalten.

Auf der Welle 2 sitzt ein Ring 7. Sein lichter Durchmesser ist knapp eineinhalbmal so groß wie der Durchmesser der Welle 2. Durch die Welle 3, die unter Druck an der Außenfläche des Ringes 7 anliegt, wird der Ring 7 mit seiner Innenfläche gegen die Oberfläche der Welle 2 gedrückt. Er ist also zwischen den beiden Wellen eingeklemmt.

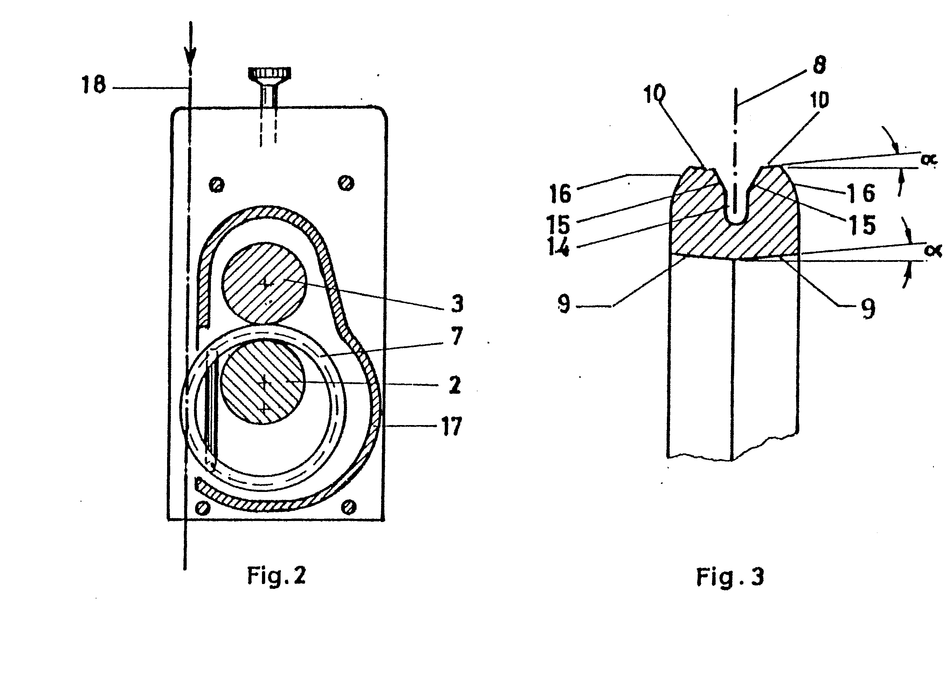

Die Innen- und die Außenfläche des Ringes 7 sind spiegelsymmetrisch in bezug auf die Mittelebene 8. Die Innenfläche besteht aus zwei von der Mittelebene 8 nach außen hin schwach konisch erweiterten Zonen, die die Laufflächen 9 bilden. Der den Konus bestimmende Winkel $\alpha$ beträgt bei dem in Fig. 3 gezeichneten Ausführungsbeispiel etwa $3°$ 30 Minuten.

Die Außenfläche des Ringes 7 weist beiderseits der Mittelebene 8 je eine schmale Zone auf, die die Lauffläche 10 bildet und ebenfalls schwach konisch nach außen hin erweitert ist.

Die beschriebene Gestaltung der Innen- und Außenfläche des Ringes bewirkt, daß der zwischen den beiden Wellen 2, 3 unter dem Druck der Federn 6 eingeklemmte Ring eine Stellung einnimmt, bei der seine Achse einen spitzen Winkel mit der Achse der Welle 2 einschließt. Die Größe des Winkels hängt von dem Winkel $\alpha$ ab. Wegen der spiegelsymmetrischen Ausbildung der Flächen des Ringes 7 gibt es zwei zueinander symmetrische derartige Stellungen. Bei diesen beiden Stellungen hat der Abstand der beiden Wellenachsen seinen kleinstmöglichen Wert. Daher sind diese Stellungen stabile Gleichgewichtsstellungen. In eine dieser beiden Stellungen stellt sich der Ring 7 selbsttätig ein.

Wenn man die Welle 2 in Umdrehung versetzt, wälzt sich der Ring 7 auf ihr ab und versetzt seinerseits die Welle 3 in Umdrehung. Wegen der Schräglage hat die Abwälzbewegung ähnlich einer Schraube eine Komponente in Achsrichtung der Welle 2. Dementsprechend bewegt sich der Ring z.B. in Richtung des Pfeiles 11. In der Nähe der beiden Wellenenden sind Anschläge 12, 13 angebracht, und zwar jeweils an der Seite der Welle 2, auf der die in Bewegungsrichtung infolge der Schrägstellung voreilende Seite 7a des Ringes 7 liegt. Wenn der Ring 7 mit seiner voreilenden Seite an den Anschlag 12 stößt, bewegt sich infolge der Trägheit die zurückhängende Seite 7b des Ringes noch weiter vorwärts. Auf diese Weise klappt der Ring 7 um und springt in seine andere Gleichgewichtslage, in der die axiale Komponente seiner Abwälzbewegung die umgekehrte Richtung hat. Der Ring bewegt sich daher bei unveränderter Drehrichtung des Antriebes jetzt in umgekehrter Richtung, bis er an den anderen Anschlag 13 gelangt. Dort erfolgt in entsprechender Weise eine erneute Bewegungsumkehr.

Beim Umklappen aus der einen in die andere stabile Schrägstellung bewirkt der Ring 7 infolge seiner Trägheit, daß die Welle 3 gegen die Rückstellkraft der Feder 6 ein wenig angehoben wird. Das setzt natürlich voraus, daß seine kinetische Energie genügend groß ist. Daher besteht eine Beziehung zwischen der Masse und Geschwindigkeit des Ringes 7 einerseits und der Rückstellkraft des Systems andererseits.

Bei dem in Fig. 3 dargestellten Ring befindet sich in der Mitte zwischen den Laufflächen 10 eine schmale, U-förmige Nut 14. Die beiderseitigen Übergangszonen 15 von der Nut zu den Laufflächen sind abgeschrägt und bilden eine etwa V-förmige Rinne. Auf der Außenseite schließen sich an die Laufflächen 10 ballig ausgebildete Randzonen 16 an. Durch die zuletzt beschriebenen Merkmale wird es möglich, den Ring 7 unmittelbar als Changierfadenführer zu verwenden.

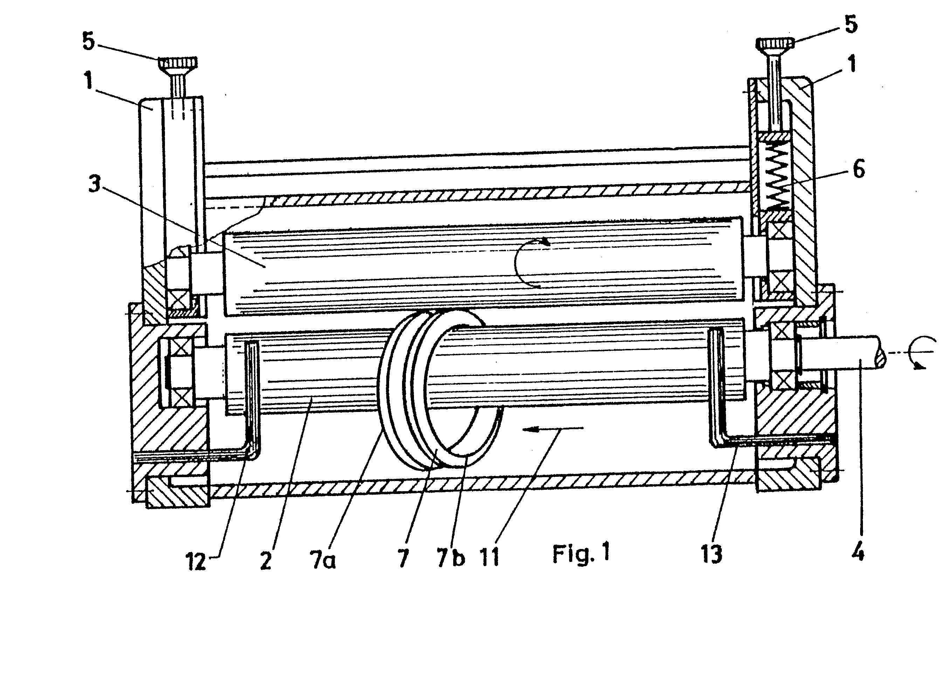

Eine Changiereinrichtung gemäß der Erfindung ist in Fig. 2 im Schnitt dargestellt. Das Getriebe ist grundsätzlich aufgebaut wie im Zusammenhang mit Fig. 1 beschrieben. Zusätzlich ist zur Abschirmung der Wellen 2, 3 gegen etwaige lose Fäden ein Gehäuse 17 vorgesehen, das das Getriebe auf der ganzen Länge bis auf einen Längsschlitz umschließt, aus dem ein Segment des Ringes 7 herausragt. Ein Faden 18, der einer nicht dargestellten Spule zugeführt wird, liegt im normalen Wickelbetrieb in der U-förmigen Nut 14 des Ringes 7 und wird durch die hin- und hergehende Bewegung des Ringes 7 über der Spule changiert. Die Vorgänge beim automatischen Spulenwechsel, z.B. mittels eines Spulenrevolvers, laufen in gleicher Weise wie bei herkömmlichen Changiereinrichtungen ab. Das Ausheben des Fadens 18 aus der Nut 14 wird durch die abgeschrägten Übergangszonen 15 begünstigt. Wenn nach dem Anlegen des Fadens an eine neue Spulenhülse und nach der Bildung eines außerhalb des Changierbereichs liegenden Anknotwickels der Faden wieder in den Changierbereich gelangt, gleitet er an der balligen Randzone 16 hoch und springt selbsttätig wieder in die Nut.

Pl

Patentansprüche:

- 7 - Krefeld, den 17. März 1982
**0072890**
T1-PL/wey - F 81/05 EU

Neumünstersche Maschinen- und
Apparatebau Gesellschaft mbH (NEUMAG)
Christianstraße 160-164

2350 Neumünster

Patentansprüche:

1. Wälzringgetriebe zur Umwandlung einer Drehbewegung in eine hin- und hergehende Bewegung, gekennzeichnet durch die folgende Merkmalkombination:

a) zwei parallele Wellen (2, 3)

aa) mindestens eine der beiden Wellen (2, 3) ist angetrieben

ab) der Abstand der beiden Wellen (2, 3) ist gegen die Wirkung einer Rückstellkraft (Feder 6) vergrößerbar

b) ein Ring (7)

ba) der lichte Durchmesser des Ringes (7) ist größer als der Durchmesser der Welle (2)

bb) der Ring (7) hat sowohl auf seiner Innenfläche als auch auf seiner Außenfläche beiderseits seiner Mittelebene (8) je eine nach außen schwach konisch erweiterte Lauffläche (9, 10)

bc) der Ring (7) liegt unter Druck mit einer Lauffläche (9) seiner Innenfläche an der einen und mit den Laufflächen (10) seiner Außenfläche an der anderen Welle an

c) zwei Anschläge (12, 13) für den Ring (7).

- 8 -

**0072890**

2. Changiereinrichtung für Spulmaschinen, mit einem Wälzringgetriebe gemäß Anspruch 1, gekennzeichnet durch eine im Schnitt etwa U-förmige Nut (14) zwischen den beiden Laufflächen (10).

3. Changiereinrichtung nach Anspruch 2, gekennzeichnet durch an die Laufflächen (10) anschließende ballig ausgebildete Randzonen (16).

- - -

Fig.1

Fig. 2

Fig. 3

0072890